# EUROPÄISCHE PATENTSCHRIFT

(11) **EP 1 059 202 B1**
(45) Veröffentlichungstag und Bekanntmachung des Hinweises auf die Patenterteilung: **14.02.2007**
(21) Anmeldenummer: 00111769.6
(22) Anmeldetag: 03.06.2000
(51) Int. Cl.: B60Q 3/02

(54) **Strahler, insbesondere Leseleuchte in Fahrzeugkabine**
Projector, particularly reading light for vehicle cabin
Projecteur, en particulier lampe de lecture pour cabine de véhicule

(30) Priorität: 11.06.1999 DE 19926561
(43) Veröffentlichungstag der Anmeldung: 13.12.2000
(73) Patentinhaber: Diehl Aerospace GmbH, 88662 Überlingen (DE)
(72) Erfinder: Beyerlein, Wolfgang, 91734 Mitteleschenbach (DE)
(74) Vertreter: Diehl Patentabteilung

(56) Entgegenhaltungen:
- DE-A- 2 507 857
- DE-A- 19 751 077
- DE-A- 19 847 884
- US-A- 5 580 163

## Beschreibung

Die Erfindung betrifft einen Strahler, insbesondere eine Leseleuchte in Kabinen von Fahrzeugen, insbesondere Luftfahrzeugen, nach dem Oberbegriff des Patentanspruchs 1.

Aus der älteren EP-A-1 031 464, veröffentlicht am 30.8.2000, der Anmelderin ist eine Einrichtung zur Be- oder Ausleuchtung von Räumen, Körpern oder Flächen, insbesondere eine Leseleuchte für Luftfahrtgeräte aus zumindest einer Lichtquelle in Form einer weißen Leuchtdiode oder einer Lumineszenzkonversions-Diode bekannt. Bei dieser Leuchte sind die Leuchtdioden von einem Körper radial umhüllt, an dessen vorderer freier, stirnseitiger Lichtaustrittsöffnung ein Linsenkörper eingesetzt ist.

Die Richtung, in der das Licht aus einer Leuchte nach diesem Stand der Technik ausgestrahlt wird, ist nach der Montage der Leuchte fest vorgegeben. Dies ist bei einem Einsatz einer solchen Leuchte z. B. als Leseleuchte in Kabinen von Fahrzeugen von Nachteil, da dort eine nachträgliche Justage der Strahlrichtung der Leuchte möglich sein muß, um geänderten Umgebungsbedingungen (z. B. veränderte Bestuhlung der Kabine) gerecht zu werden.

Deshalb stellt sich der Erfindung die Aufgabe, ausgehend von dem genannten Stand der Technik einen Strahler vorzuschlagen, bei dem nach der Montage die Richtung des Lichtstrahls innerhalb vorgegebener Grenzwerte justierbar ist.

Diese Aufgabe wird gemäß der Erfindung durch einen Strahler mit den Merkmalen des Patentanspruchs 1 gelöst. Vorteilhafte Ausgestaltungen und Weiterbildungen der Erfindung sind in den Unteransprüchen beschrieben.

Dadurch, daß ein Rahmen vorgesehen ist, der das Leuchtmittel trägt und der um mindestens eine horizontale und eine vertikale Achse drehbar bzw. schwenkbar ist sowie in der jeweiligen ausgewählten Stellung festgestellt werden kann, kann die Richtung des Lichtstrahls nach der Montage justiert und fixiert werden.

Dazu ist vorzugsweise vorgesehen, daß dieser Rahmen von einem Aufnahmekörper aufnehmbar und in diesem um mindestens eine horizontale Achse dreh- bzw. schwenkbar gelagert ist, daß der Aufnahmekörper seinerseits in einem Befestigungsring gelagert und dabei um eine vertikale Achse drehbar ist.

Zur Fixierung der Strahlrichtung ist in vorteilhafter Weise vorgesehen, daß sowohl der Rahmen mit dem Aufnahmekörper als auch der Aufnahmekörper mit dem Befestigungsring mittels jeweils eines Federelementes verrastbar sind. Die die Verrastung des Rahmens mit dem Aufnahmekörper bewirkende Feder ist in Ausgestaltung in einer sich über einen Teil des Umfanges des Rahmens erstreckenden Nut gelagert und im wesentlichen in Form eines Kreisabschnittes ausgeführt, wobei dieser Kreisabschnitt einen etwas geringeren Radius als die Bodenfläche der Nut hat. Die Verrastung des Aufnahmekörpers mit dem Befestigungsring erfolgt federnd mittels einer Nase am Aufnahmekörper, wobei die Nase mit der gezahnt ausgeführten Oberkante des Befestigungsrings zusammenwirkt.

In Weiterbildung ist vorgesehen, daß die Leuchtdioden einerseits auf einer Leiterplatte befestigt und verschaltet sind, daß sie andererseits mit ihrer lichtabstrahlenden Seite in einer Fassung stecken, die die Leuchtdioden jeweils einzeln radial umhüllt und an deren Lichtaustrittsöffnung ein Linsenkörper aufgesetzt ist, und daß der Rahmen die Fassung sowie den Linsenkörper aufnimmt. Desweiteren trägt der Rahmen einen Kühlkörper, der seinerseits mit der Leiterplatte wärmeleitend verbunden ist. Die Anschlußleitungen der Leiterplatte sind durch eine Öffnung im Kühlkörper geführt, welche nach der Montage wasserdicht verschlossen, vorzugsweise verschweißt wird, so daß durch den Kühlkörper, den Rahmen und den Linsenkörper ein Gehäuse gebildet wird, das die Leiterplatte mit den Leuchtdioden und die Fassung wasserdicht einschließt.

In bevorzugter Ausführungsform sind die einzelnen Teile des Strahlers so konstruiert, daß sie miteinander allein durch Einrasten verbindbar sind.

Anhand der Zeichnungen soll im folgenden ein Ausführungsbeispiel der Erfindung näher erläutert werden. Es zeigen:

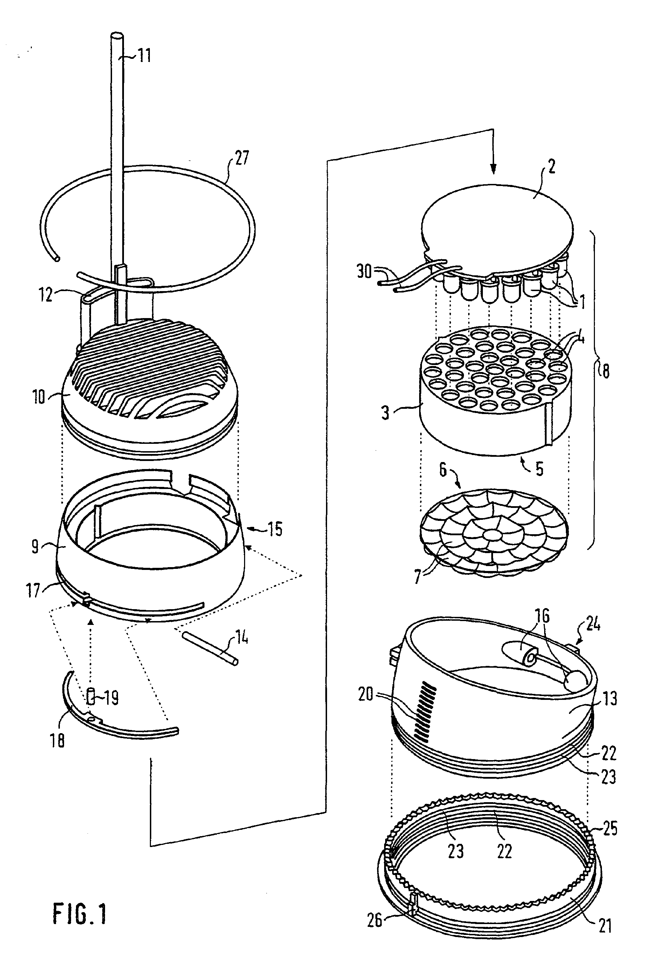

- Fig. 1: in Explosionsdarstellung die Einzelteile des Strahlers und

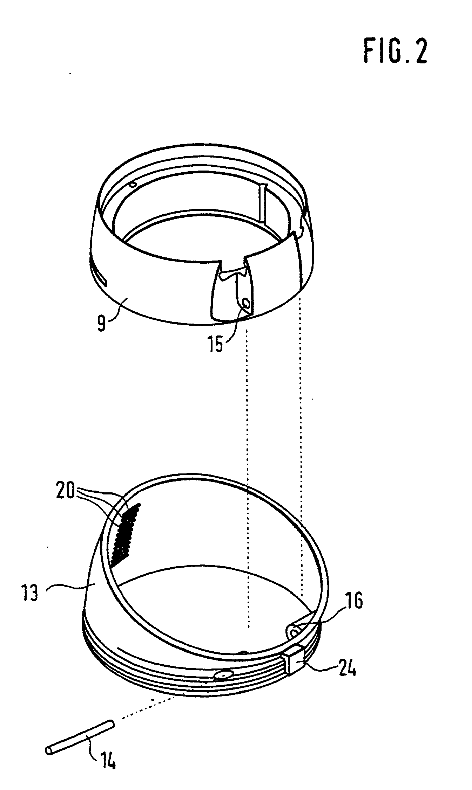

- Fig. 2: drei der Einzelteile aus einer anderen Perspektive.

Die Leuchtdioden 1, im Ausführungsbeispiel weißes Licht abstrahlende Lumineszenzkonversions-Dioden, sind mit ihren Anschlußbeinchen auf einer Leiterplatte 2 befestigt, verlötet und verschaltet. Die Verschaltung ist in der Abbildung nicht gezeigt; sie ist vorzugsweise so ausgeführt, daß eine gewisse Anzahl an Leuchtdioden in Reihe geschaltet und diese Reihe zu einer oder mehreren anderen Reihen hintereinander geschalteter Leuchtdioden parallel geschaltet ist. Zu jeder Leuchtdiode ist eine Zener-Diode parallel in Sperrichtung geschaltet, damit bei Ausfall einer Leuchtdiode alle anderen Dioden weiter leuchten. Über die beiden Anschlußleitungen 3 werden die Leuchtdioden mit der Versorgungsspannung verbunden.

Die auf der Leiterplatte 2 befestigten Leuchtdioden 1 sind in die Fassung 3 einsteckbar. Die Fassung 3 weist durchgehende Bohrungen 4 auf, in welche jeweils eine Leuchtdiode einsteckbar ist, wodurch die Leuchtdioden 1 von der Fassung 3 jeweils einzeln radial umhüllt sind.

Auf die Lichtaustrittsöffnung 5 der Fassung 3 ist ein Linsenkörper 6 aufsteckbar. Der Linsenkörper 6 ist so gestaltet, daß auf die Lichtaustrittsöffnung 5 jeder einzelnen eine Leuchtdiode 1 aufnehmenden Bohrung 4 ein Linsenelement 7 zu liegen kommt, wodurch das Licht aller Leuchtdioden 1 auf einen einzigen Leuchtfleck fokussiert wird.

Die aus den Leuchtdioden 1, der Leiterplatte 2, der Fassung 3 und dem Linsenkörper 6 gebildete Leuchteinheit 8 ist in den Rahmen 9 einsteckbar, der wiederum einen aus wärmeleitendem Material bestehenden Kühlkörper 10 trägt. Dieser Kühlkörper 10 ist so aufgesetzt, daß er in wärmeleitendem Kontakt mit der Leiterplatte 2 steht, um die beim Betrieb der Leuchtdioden entstehende Wärme aus dem Inneren des Strahlers nach außen zu transportieren. Der Bolzen 19 dient dazu, eine Verdrehung des Kühlkörpers 10 auf dem Rahmen 9 zu verhindern.

Die Anschlußleitungen 3 der Leiterplatte 2 sind in einer flexiblen Röhre 11 durch eine Öffnung 12 im Kühlkörper 10 geführt. Nach der Montage der Leuchte wird die Öffnung 12 im Kühlkörper 10 wasserdicht verschlossen, vorzugsweise vergossen. Der Rahmen 9 faßt darüber hinaus den Linsenkörper 6 wasserdicht ein. Somit entsteht durch den Kühlkörper 10, den Rahmen 9 und den Linsenkörper 6 ein Gehäuse, welches die Leuchtdioden 1, die Leiterplatte 2 sowie die Fassung 3 wasserdicht umschließt. Dadurch wird verhindert, daß die Innenseiten des Linsenkörpers 6 verschmutzen und so die Linsenelemente 7 trüb werden.

Der Rahmen 9 ist so ausgeführt, daß er von einem Aufnahmekörper 13 aufnehmbar ist und mit diesem durch eine Achse 14 derart verbindbar ist, daß er um diese horizontal liegende Achse 14 drehbar bzw. schwenkbar gelagert ist.

Die Achse 14 ist einerseits durch eine Bohrung 15 auf der Rückseite des Rahmens 9 steckbar und andererseits in zwei Lagern 16 im Aufnahmekörper 13 gelagert. Der Rahmen 9 und der Aufnahmekörper 13 sind so ausgeführt, daß der Rahmen 9 von einer waagrechten Ausgangsposition um die Achse 14 um ca. 20° nach oben schwenkbar ist.

In einer Nut 17 im Rahmen 9 ist eine Feder 18 gelagert. Diese Feder 18 ist im wesentlichen in Form eines Kreisabschnittes ausgeführt, welcher einen etwas geringeren Radius als die Bodenfläche der Nut 17 hat. Wird der Rahmen 9 mitsamt der Feder 18 in den Aufnahmekörper 13 gesteckt, so rastet die Feder 18 in die Rastöffnungen 20 in dem Aufnahmekörper 13 ein. Dadurch kann der Rahmen 9 in verschiedenen Schwenkstellungen im Aufnahmekörper 13 festgestellt werden.

Der Aufnahmekörper 13 ist in einen Befestigungsring 21 aufnehm- bzw. einsteckbar. Dabei sind der Aufnahmekörper 13 und der Befestigungsring 21 durch Ringe 22 und Rillen 23 so ausgeführt, daß der Aufnahmekörper 13 im Befestigungsring 21 um eine vertikale Achse (durch den Mittelpunkt des von dem Befestigungsring 21 beschriebenen Kreises) drehbar gelagert ist. Dabei greift eine an der Rückseite des Aufnahmekörpers 13 angebrachte Nase 24 in die Zahnung der Oberkante 25 des Befestigungsrings 21 federnd ein. Dadurch erfolgt die Drehung des Aufnahmekörpers 13 im Befestigungsring 21 rastend; der Strahler ist also auch hinsichtlich dieser Drehung um eine vertikale Achse feststellbar. Der Stopper 26, der mit der Nase 24 zusammenwirkt, verhindert, daß der Aufnahmekörper 13 im Befestigungsring 21 beliebig weit in eine Richtung drehbar ist. Dabei bleibt allerdings gewährleistet, daß eine Drehung des Aufnahmekörpers 13 um beinahe 360° möglich ist.

Der fertig montierte Strahler wird mittels eines Spannringes 27 in einer entsprechenden Öffnung in einer den Strahler aufnehmenden Platte, beispielsweise in der Innenverkleidung einer Flugzeugkabine, gehaltert. Dabei bewirkt der Spannring 27 eine feste Verbindung zwischen der Platte bzw. der Innenverkleidung und dem Befestigungsring 21.

Durch die Möglichkeit, den Rahmen 9 aus der Horizontalen um etwa 20° nach oben zu schwenken und gleichzeitig den Aufnahmekörper 13 um beinahe 360° zu drehen, kann die Richtung des Lichtstrahls ausgehend von der Senkrechten nach nahezu allen Seiten um ca. 20° geschwenkt und mittels Rastung festgestellt werden. Dabei befindet sich niemals ein Teil des Strahlers tiefer als die Unterkante des Befestigungsrings 21, so daß der in einer Platte bzw. Innenverkleidung eingebaute Strahler stets bündig mit dieser Platte bzw. Innenverkleidung abschließt und nicht übersteht, wie das bei schwenkbaren Strahlern nach dem Stand der Technik heute überwiegend der Fall ist.

## Patentansprüche

1. Strahler, insbesondere Leseleuchte in Kabinen von Fahrzeugen, insbesondere Luftfahrzeugen, mit Licht abstrahlenden Leuchtdioden als Leuchtmittel, die von einem Körper radial umhüllt sind, an dessen stirnseitiger Lichtaustrittsöffnung ein Linsenkörper aufgesetzt ist,
**dadurch gekennzeichnet,**
**dass** ein das Leuchtmittel tragender Rahmen (9) vorgesehen ist, der um mindestens eine horizontale und eine vertikale Achse drehbar bzw. schwenkbar und in der jeweiligen ausgewählten Stellung feststellbar ausgeführt ist.

2. Strahler nach Anspruch 1,
**dadurch gekennzeichnet,**
**daß** der Rahmen(9) von einem Aufnahmekörper (13) aufnehmbar und in diesem um mindestens eine horizontale Achse (14) drehbar bzw. schwenkbar gelagert ist und daß der Aufnahmekörper (13) in einem Befestigungsring (21) gehaltert und dabei um die vertikale Achse drehbar ist.

3. Strahler nach Anspruch 2,
**dadurch gekennzeichnet,**
**daß** der Rahmen (9) mittels eines Federelementes mit dem Aufnahmekörper (13) und/oder der Aufnahmekörper (13) federnd mit dem Befestigungsring (21) verrastbar ist.

4. Strahler nach Anspruch 3,
**dadurch gekennzeichnet,**
**daß** das die Verrastung des Rahmens (9) mit dem Aufnahmekörper (13) bewirkende Federelement durch eine Feder (18) gebildet wird, die in einer sich über einen Teil des Umfanges des Rahmens (9) erstreckenden Nut (17) gelagert und im wesentlichen in Form eines Kreisabschnittes ausgeführt ist, welcher einen etwas geringeren Radius als die Bodenfläche der Nut (17) hat.

5. Strahler nach Anspruch 3,
**dadurch gekennzeichnet,**
**daß** die Verrastung des Aufnahmekörpers (13) mit dem Befestigungsring (21) mittels einer Nase (24) am Aufnahmekörper (13) federnd erfolgt, wobei die Nase (24) mit der gezahnt ausgeführten Oberkante (25) des Befestigungsrings (21) zusammenwirkt.

6. Strahler nach einem der vorherigen Ansprüche, bestehend aus
einer mit den Leuchtdioden (1) bestückten Leiterplatte (2),
einer Fassung (3), welche die Leuchtdioden (1) aufnimmt und **dadurch** den Körper bildet, der die Leuchtdioden (1) jeweils einzeln radial umhüllt,
einem an der Lichtaustrittsöffnung (5) der Fassung (3) aufgesetzten Linsenkörper (6),
einem die Fassung (3) und den Linsenkörper (6) aufnehmenden Rahmen (9),
einem von dem Rahmen (9) getragenen Kühlkörper (10), der mit der Leiterplatte (2) wärmeleitend verbunden ist,
einem den Rahmen (9) aufnehmenden und um eine horizontale Achse (14) drehbar bzw. schwenkbar lagernden Aufnahmekörper (13) sowie
einem den Aufnahmekörper (13) um eine vertikale Achse drehbar halternden Befestigungsring (21).

7. Strahler nach Anspruch 6,
**dadurch gekennzeichnet,**
**daß** die Anschlußleitungen (3) der Leiterplatte (2) durch eine Öffnung (12) im Kühlkörper (10) geführt sind und die Öffnung (12) nach der Montage wasserdicht verschlossen, vorzugsweise vergossen ist, daß der Rahmen (9) den Linsenkörper (6) wasserdicht einfaßt und so durch Kühlkörper (10), Rahmen (9) und Linsenkörper (6) ein die Leiterplatte (2) mit den Leuchtdioden (1) und die Fassung (3) wasserdicht einschließendes Gehäuse gebildet wird.

8. Strahler nach einem der vorherigen Ansprüche,
**dadurch gekennzeichnet,**
**daß** der Strahler mittels eines Spannringes (27) in einer entsprechenden Öffnung in einer den Strahler aufnehmenden Platte, insbesondere in der Innenverkleidung einer Flugzeugkabine, gehaltert ist, wobei der Spannring (27) eine feste Verbindung zwischen der Platte bzw. der Innenverkleidung und dem Befestigungsring (21) bewirkt.

9. Strahler nach einem der vorherigen Ansprüche,
**dadurch gekennzeichnet,**
**daß** die Verbindung der verschiedenen Teile des Strahlers miteinander allein durch Einrasten erfolgt.

## Claims

1. Lamp, in particular reading luminaire in cabins of vehicles, in particular aircraft, having light-emitting diodes as luminous means, which are radially encased by a body onto whose end-side light exit opening a lens body is fitted, **characterized in that** a frame (9) is provided which carries the luminous means, can rotate or pivot about at least one horizontal and one vertical axis and is designed such that it can be fixed in the respective selected position.

2. Lamp according to Claim 1, **characterized in that** the frame (9) can be received by a receptacle (13) and is mounted therein such that it can rotate or pivot about at least one horizontal axis (14) and **in that** the receptacle (13) is held in an attachment ring (21) and can at the same time rotate about the vertical axis.

3. Lamp according to Claim 2, **characterized in that** the frame (9) can be latched to the receptacle (13) by means of a spring element and/or the receptacle (13) can be resiliently latched to the attachment ring (21).

4. Lamp according to Claim 3, **characterized in that** the spring element effecting the latching of the frame (9) to the receptacle (13) is in the form of a spring (18), which is mounted in a groove (17) extending over part of the circumference of the frame (9) and is substantially in the form of a circular section which has a slightly smaller radius than the base face of the groove (17).

5. Lamp according to Claim 3, **characterized in that** the latching of the receptacle (13) to the attachment ring (21) is effected resiliently by means of a lug (24) on the receptacle (13), wherein the lug interacts with the toothed upper edge (25) of the attachment ring (21).

6. Lamp according to one of the preceding claims, comprising
a printed-circuit board (2) fitted with the light-emitting diodes (1),
a holder (3), which receives the light-emitting diodes (1) and thus forms the body, in each case individually encasing the light-emitting diodes (1) in a radial manner,
a lens body (6) fitted on the light exit opening (5) of the holder (3),
a frame (9) receiving the holder (3) and the lens body (6),
a heat sink (10) carried by the frame (9), which heat sink is connected to the printed-circuit board (2) in a thermally conductive manner,
a receptacle (13) which receives the frame (9) and is mounted such that it can rotate or pivot about a horizontal axis (14) and
an attachment ring (21) holding the receptacle (13) such that it can rotate about a vertical axis.

7. Lamp according to Claim 6, **characterized in that** the connection lines (30) of the printed-circuit board (2) are guided through an opening (12) in the heat sink (10) and the opening (12), after mounting, is closed in a water-tight manner, preferably potted, and **in that** the frame (9) surrounds the lens body (6) in a water-tight manner and thus a housing enclosing the printed-circuit board (2) with the holder light-emitting diodes (1) and the holder (3) in a water-tight manner is formed by the heat sink (10), frame (9) and lens body (6).

8. Lamp according to one of the preceding claims, **characterized in that** the lamp is held by means of a clamping ring (27) in a corresponding opening in a board receiving the lamp, in particular the inner panelling of an aircraft cabin, wherein the clamping ring (27) effects a fixed connection between the board or the inner panelling and the attachment ring (21).

9. Lamp according to one of the preceding claims, **characterized in that** the connection of the different parts of the lamp to one another is effected by means of latching alone.

## Revendications

1. Projecteur, en particulier lampe de lecture pour cabines de véhicule, en particulier pour des aéronefs, avec, comme source lumineuse, des diodes électroluminescentes émettant de la lumière et qui sont enveloppées radialement dans un corps, dont l'ouverture frontale de sortie de la lumière est couverte par un corps formant lentille, **caractérisé en ce qu'**on a prévu un cadre (9) supportant la source lumineuse qui est réalisé de manière à pouvoir pivoter ou, selon le cas, basculer autour d'au moins un axe horizontal et d'un axe vertical et de manière à pouvoir être bloqué dans la position quelconque choisie.

2. Projecteur selon la revendication 1, **caractérisé en ce que** le cadre (9) est placé de manière amovible par rapport au corps formant logement (13) et de manière à pouvoir pivoter ou, selon le cas, basculer dans celui-ci au moins autour d'un axe horizontal (14) et **en ce que** le corps formant logement (13) est maintenu dans une bague de fixation (21) et peut alors pivoter autour de l'axe vertical.

3. Projecteur selon la revendication 2, **caractérisé en ce que**, au moyen d'un élément ressort, le cadre (9) peut être bloqué avec le corps formant logement (13) et/ou **en ce que** le corps formant logement (13) peut être bloqué de manière élastique avec la bague de fixation (21).

4. Projecteur selon la revendication 3, **caractérisé en ce que** le verrouillage du cadre (9) avec l'élément élastique agissant avec le corps formant logement (13) est constitué par un ressort (18) qui est placé dans une gorge (17) s'étendant sur une partie du périmètre du cadre (9) et est réalisé pour l'essentiel sous la forme d'un tronçon circulaire, lequel présente un rayon légèrement plus petit que celui de la surface du fond de la gorge (17).

5. Projecteur selon la revendication 3, **caractérisé en ce que** le verrouillage du corps formant logement (13) avec la bague de fixation (21) a lieu de manière élastique au moyen d'un ergot (24) sur le corps formant logement (13), l'ergot (24) agissant conjointement avec la face supérieure (25) de la bague de fixation (21), laquelle face est réalisée de manière crantée.

6. Projecteur selon l'une quelconque des revendications précédentes se composant :
d'une carte à circuit imprimé (2) équipée de diodes électroluminescentes (1) ;
d'une douille (3) qui accueille les diodes électroluminescentes (1) et forme ainsi le corps qui enveloppe les diodes électroluminescentes (1) pratiquement uniquement radialement ;
d'un corps formant lentille (6) placé sur l'ouverture de sortie de la lumière (5) de la douille (3) ;
d'un cadre (9) accueillant la douille (3) et le corps formant lentille (6) ;
d'un corps dissipateur (10) porté par le cadre (9) qui est relié avec la carte à circuit imprimé (2) de manière à évacuer la chaleur ;
d'un corps formant logement (13) accueillant le cadre (9) et disposé de manière à pouvoir pivoter ou, selon le cas, basculer autour d'un axe horizontal (14) ainsi que
d'une bague de fixation (21) maintenant le corps formant logement (13) de manière à pouvoir pivoter autour d'un axe vertical.

7. Projecteur selon la revendication 6, **caractérisé en ce que** les fils de raccordement (30) de la carte à circuit imprimé (2) sont guidés à travers l'ouverture (12) du corps dissipateur (10) et l'ouverture (12) est obturée de manière étanche à l'eau après le montage, de préférence par scellement de sorte que le cadre (9) englobe le corps formant lentille (6) de manière étanche à l'eau et qu'on forme ainsi un boîtier enfermant, de manière étanche, la carte à circuit imprimé (2) avec les diodes électroluminescentes (1) et la douille (3) grâce au corps dissipateur (10), au cadre (9) et au corps formant lentille (6).

8. Projecteur selon l'une quelconque des revendications précédentes, **caractérisé en ce que** le projecteur est maintenu, au moyen d'une bague de serrage (27), dans une ouverture correspondante dans un panneau accueillant le projecteur, en particulier dans le revêtement intérieur d'une cabine d'avion, la bague de serrage (27) établissant un assemblage rigide entre le panneau ou, selon le cas, le revêtement intérieur et la bague de fixation (21).

9. Projecteur selon l'une quelconque des revendications précédentes, **caractérisé en ce que** l'assemblage des différentes pièces du projecteur entre elles a lieu uniquement par encliquetage.
